# EUROPÄISCHE PATENTSCHRIFT

(11) **EP 1 279 040 B1**
(45) Veröffentlichungstag und Bekanntmachung des Hinweises auf die Patenterteilung: **02.08.2006**
(21) Anmeldenummer: 00990536.5
(22) Anmeldetag: 14.12.2000
(51) Int. Cl.: G01R 27/06

(54) **VERFAHREN ZUR DETEKTION UND AUSWERTUNG DER FEHLANPASSUNG EINER AN EINE ENDSTUFE ANGESCHLOSSENEN ANTENNE UND MOBILFUNKGERÄT**
DETECTION AND EVALUATION METHOD FOR THE MISMATCH OF AN ANTENNA CONNECTED TO A HIGH-LEVEL STAGE, AND MOBILE RADIO TELEPHONE
PROCEDE DE DETECTION ET D'EVALUATION DU DEFAUT D'ADAPTATION D'UNE ANTENNE CONNECTEE A UN ETAGE DE SORTIE ET APPAREIL RADIOTELEPHONIQUE MOBILE

(30) Priorität: 29.03.2000 DE 10015684
(43) Veröffentlichungstag der Anmeldung: 29.01.2003
(73) Patentinhaber: SIEMENS AKTIENGESELLSCHAFT, 80333 München (DE)
(72) Erfinder: FÜNFGELDER, Helmut, 85386 Dietersheim (DE); ECKERT, Rainer, 81677 München (DE)
(86) Internationale Anmeldenummer: PCT/DE2000/004464
(87) Internationale Veröffentlichungsnummer: WO 2001/073454

(56) Entgegenhaltungen:
- EP-A- 0 844 485
- DE-C- 4 434 915
- US-A- 4 547 746

## Beschreibung

Die Erfindung betrifft ein Verfahren zum Ermitteln der Fehlanpassung einer an eine Endstufe angeschlossenen Antenne eines Mobilfunkgerätes und zum Anpassen einer Sendeleistung der Endstufe, wobei zwischen der Endstufe und der Antenne ein Anteil einer von der Endstufe abgegebenen Vorwärts-Leistung (Vorwärts-Ist-Wert) und ein weiterer Anteil einer von der Antenne reflektierten Rückwärts-Leistung (Rückwärts-Ist-Wert) ausgekoppelt wird, in einer Vorwärts-Regelschleife der Vorwärts-Ist-Wert detektiert und mit einem von mindestens einer Wertetabelle ausgegebenen Vorwärts-Soll-Wert verglichen und je nach Vorwärts-Soll-Wert die Sendeleistung der Endstufe verändert wird.

Weiterhin betrifft die Erfindung ein Mobilfunkgerät mit einer Anordnung zum Ermitteln der Fehlanpassung einer an eine Endstufe angeschlossenen Antenne sowie zur Anpassung einer Sendeleistung der Endstufe, wobei ein Mittel zur Bestimmung der Sendeleistung und einer von der Antenne reflektierten Leistung vorgesehen ist, wobei das Mittel, vorzugsweise einen Koppler, einen Detektor und einen Vergleicher aufweist, und der Koppler einen Anteil einer von der Endstufe abgegebenen Vorwärts-Leistung (Vorwärts-Ist-Wert) und einen weiteren Anteil einer von der Antenne reflektierten Rückwärts-Leistung (Rückwärts-Ist-Wert) auskoppelt, der Detektor den Vorwärts-Ist-Wert detektiert und der Vergleicher diesen Vorwärts-Ist-Wert mit einem von mindestens einer Wertetabelle festgelegten Vorwärts-Soll-Wert vergleicht und die Sendeleistung entsprechend regelt.

Endstufen in Mobilfunkgeräten reagieren sehr sensibel auf Fehlanpassungen am Ausgang der Endstufe. Wird beispielsweise die Antenne abgedeckt oder liegt die Antenne auf metallischen Oberflächen, kann sie nicht die komplette Sendeleistung übertragen. Ein großer Teil wird reflektiert und der Strom in der Endstufe steigt. Hierdurch bricht die Spannung am Akku ein. Die Betriebszeit des Mobilfunkgerätes verkürzt sich. Somit ist es häufig erwünscht, die Anpassung der Antenne während des Betriebes zu überwachen.

Bei bekannten Anordnungen zum Ermitteln der Fehlanpassung wird mit Hilfe eines Kopplers sowohl aus der vorlaufenden (in Richtung Antenne) als auch aus der rücklaufenden (von der Antenne reflektieren) Leistung ein Teil ausgekoppelt und HF-Detektoren zugeführt. Beide Leistungsanteile werden addiert und mit einer Solleistung verglichen. Entsprechend den ermittelten Ist-Werten stellt sich die Regelung der Endstufe ein. So wird sichergestellt, daß die Endstufe genau die Leistung liefert, die gefordert wird. Hierbei ist von Nachteil, daß nicht unterschieden werden kann, wieviel Leistung reflektiert wird. Somit kann der genaue Wert der Fehlanpassung aber nicht festgestellt werden.

Es ist daher Aufgabe der Erfindung, ein Verfahren dahingehend zu entwickeln, das es erlaubt, die Fehlanpassung sehr genau zu bestimmen und die Sendeleistung des Mobilfunkgerätes entsprechend der Fehlanpassung einzustellen. Weiterhin soll ein Mobilfunkgerät zur Durchführung des erfindungsgemäßen Verfahrens entwickelt werden.

Die Aufgabe zur Entwicklung eines Verfahrens wird durch die Merkmale des ersten Verfahrensanspruches, die Aufgabe zur Entwicklung eines Mobilfunkgerätes wird durch die Merkmale des ersten Vorrichtungsanspruches gelöst.

Demgemäß schlagen die Erfinder vor, ein Verfahren zum Ermitteln der Fehlanpassung einer an eine Endstufe angeschlossenen Antenne eines Mobilfunkgerätes und zum Anpassen einer Sendeleistung der Endstufe, wobei zwischen der Endstufe und der Antenne ein Anteil einer von der Endstufe abgegebenen Vorwärts-Leistung (Vorwärts-Ist-Wert) und ein weiterer Anteil einer von der Antenne reflektierten Rückwärts-Leistung (Rückwärts-Ist-Wert) auskoppelt wird, in einer Vorwärts-Regelschleife der Vorwärts-Ist-Wert detektiert und mit einem von mindestens einer Wertetabelle ausgegebenen Vorwärts-Soll-Wert verglichen und je nach Vorwärts-Soll-Wert die Sendeleistung der Endstufe verändert wird, dahingehend weiterzuentwickeln, daß der Rückwärts-Ist-Wert detektiert und mit einem Rückwärts-Soll-Wert verglichen wird und bei einem Überschreiten dieses Rückwärts-Soll-Wertes der Vorwärts-Soll-Wert verändert werden kann.

In einer bevorzugten Ausführung des Verfahrens wird der Rückwärts-Soll-Wert als fester Schwellenwert festgelegt. Dieser Schwellwert ist also unabhängig von der Leistungsstufe des Mobilfunkgerätes und definiert den maximal tolerierbaren Wert für die von der Antenne reflektierten Leistung. Überschreitet beispielsweise der von der Antenne reflektierte Rückwärts-Ist-Wert den Schwellenwert von 1 Watt, dann wird der Vorwärts-Soll-Wert verändert. Hierdurch wird in der Vorwärts-Regelschleife der Vorwärts-Ist-Wert und somit die Sendeleistung der Endstufe verändert. Ein fester Schwellenwert ist vorteilhaft, da Fehlanpassungen an der Antenne, vor allem bei hohen Sendeleistungen, kritisch sind, wenn eine große Leistung reflektiert wird.

In einer anderen Variante wird der Rückwärts-Soll-Wert mit Hilfe der mindestens einen Wertetabelle in Abhängigkeit von dem Vorwärts-Soll-Wert festgelegt. Je nach Vorwärts-Soll-Wert, den die Wertetabelle für die jeweilige Sendeleistung ausgibt, wird der Rückwärts-Soll-Wert festgelegt. Beispielsweise ist bei einem Vorwärts-Soll-Wert (der Soll-Sendeleistung) von 2 Watt der Rückwärts-Soll-Wert, also der maximal tolerierbare Wert für die reflektierte Leistung, 0,7 Watt. Bei einem Vorwärts-Soll-Wert von 1 Watt ist die maximal tolerierbare reflektierte Leistung 0,4 Watt. Es versteht sich, daß diese maximal tolerierbaren Werte in Abhängigkeit von den verschiedenen Leistungsstufen zuvor festgelegt werden.

In einer bevorzugten Weiterentwicklung des erfindungsgemäßen Verfahrens wird bei Überschreiten des Rückwärts-Soll-Wertes ein Korrektursignal erzeugt, wodurch der Vorwärts-Soll-Wert verändert wird. Eine zu große Fehlanpassung bewirkt also, daß über den korrigierten Vorwärts-Soll-Wert der Vorwärts-Ist-Wert (also die Sendeleistung) des Mobilfunkgerätes verändert werden kann. Ist die Fehlanpassung beseitigt, so kann wieder mit den ursprünglichen Werten gearbeitet werden.

Eine weitere Ausgestaltung des erfindungsgemäßen Verfahrens sieht vor, daß bei Überschreitung des Rückwärts-Soll-Wertes ein Warnsignal erzeugt wird. Dieses Warnsignal kann zum Beispiel ein akustisches Signal (beispielsweise ein Piepton), ein vibratorisches Signal (ein Rütteln) oder ein optisches Signal (ein Aufleuchten oder eine Schrift im Display des Handys) sein. Hierdurch kann der Benutzer über den Zustand informiert werden.

Weiterhin ist es möglich, daß das Warnsignal ausgelöst wird, ohne daß die Wertetabelle eine Änderung der Sendeleistung der Endstufe bewirkt.

Vorteilhaft kann die Sendeleistung der Endstufe erniedrigt werden, wenn das Überschreiten des Rückwärts-Soll-Wertes durch eine Abschirmung der Antenne von einem menschlichen Körper verursacht wird, wenn also beispielsweise ein Teil der Antenne von einer Hand abgedeckt wird. Hierdurch soll verhindert werden, daß eine Schädigung des Menschen, beispielsweise durch vorhandene Mikrowellen, auftritt.

Darüber hinaus kann die Sendeleistung der Endstufe erhöht werden, wenn das Überschreiten des Rückwärts-Soll-Wertes durch eine Abschirmung und/oder Rückkopplung der Antenne durch einen Gegenstand verursacht wird. Hier kann zum Beispiel eine Fehlanpassung verursacht werden, wenn die Antenne auf einer metallischen Oberfläche liegt. Die Erhöhung der Sendeleistung bewirkt in diesem Fall, daß eine ausreichende Sendeleistung gewährleistet wird.

Entsprechend dem Erfindungsgedanken schlagen die Erfinder die Weiterentwicklung eines bekannten Mobilfunkgerätes vor. Das bekannte Mobilfunkgerät enthält eine Anordnung zum Ermitteln der Fehlanpassung einer an eine Endstufe angeschlossenen Antenne sowie zur Anpassung einer Sendeleistung der Endstufe, wobei ein Mittel zur Bestimmung der Sendeleistung und einer von der Antenne reflektierten Leistung vorgesehen ist, wobei das Mittel vorzugsweise einen Koppler, einen Detektor und einen Vergleicher aufweist, und der Koppler einen Anteil einer von der Endstufe abgegebenen Vorwärts-Leistung (Vorwärts-Ist-Wert) und einen weiteren Anteil einer von der Antenne reflektierten Rückwärts-Leistung (Rückwärts-Ist-Wert) auskoppelt, der Detektor den Vorwärts-Ist-Wert detektiert und der Vergleicher diesen Vorwärts-Ist-Wert mit einem von mindestens einer Wertetabelle festgelegten Vorwärts-Soll-Wert vergleicht und die Sendeleistung entsprechend regelt. Die Verbesserung besteht darin, daß ein weiterer Vergleicher, ein weiterer Detektor und eine Korrekturschaltung vorgesehen sind, wobei der Vergleicher den von dem Detektor detektierten Rückwärts-Ist-Wert mit einem von der Korrekturschaltung ausgegebenen Rückwärts-Soll-Wert vergleicht und bei Überschreiten dieses Wertes den Vorwärts-Soll-Wert verändern kann. Dieser von der Korrekturschaltung ausgegebene Rückwärts-Soll-Wert kann als fester Schwellenwert vorgesehen sein, der die maximal tolerierbare, von der Antenne reflektierte Leistung definiert. In vorteilhafter Weise ist dieser feste Schwellenwert von Mobilfunkgerät zu Mobilfunkgerät gleich.

Eine Ausgestaltung des erfindungsgemäßen Mobilfunkgerätes sieht vor, daß der Detektor beispielsweise eine Detektordiode oder ein logarithmischer Detektor darstellt. Die Ausbildung als logarithmischer Detektor hat den Vorteil, daß die Ausgangsspannung in linearem Zusammenhang zur Eingangsleistung ist.

In einer vorteilhaften Weiterentwicklung weist die Korrekturschaltung ein Mittel zur Anpassung des Rückwärts-Soll-Wertes in Abhängigkeit von der Signalleistung auf. Die Korrekturschaltung kann eine Tabelle enthalten, die für eine bestimmte Signalleistung, also für einen bestimmten Vorwärts-Soll-Wert, einen maximal tolerierbaren Wert enthält und diesen als Rückwärts-Soll-Wert ausgibt.

Eine Weiterentwicklung des Mobilfunkgerätes sieht eine Auswerteeinheit vor, die bei Überschreiten des Rückwärts-Soll-Wertes ein Warnsignal und/oder ein Korrektursignal erzeugt. Die Auswerteeinheit kann zum Beispiel ein Geräusch, eine Vibration oder das Erscheinen einer Nachricht auf dem Display des Handys erzeugen. Weiterhin ist es vorteilhaft, wenn die Auswerteeinheit ein Korrektursignal erzeugt, das die Wertetabelle veranlaßt, einen anderen Vorwärts-Soll-Wert an die Vorwärts-Regelschleife abzugeben.

Gemäß dem Erfindungsgedanken ist anzumerken, daß die fest abgelegte Wertetabelle durch die Korrektur nicht verändert wird. Lediglich der Vorwärts-Soll-Wert wird verändert. Dieser veränderte neue Vorwärts-Soll-Wert ist allerdings immer nur so lange gültig, wie die nicht tolerierbare Fehlanpassung besteht. Der in der Entwicklung und Produktion festgesetzte Standard-Soll-Wert, der zu einer zur Leistungsstufe passenden Sendeleistung führt, wird also durch die Korrektur nie dauerhaft verändert.

Weitere Merkmale der Erfindung ergeben sich aus der nachfolgenden Beschreibung eines Ausführungsbeispiels unter Bezugnahme auf die Zeichnungen. Es zeigen:
- Figur 1: eine erfindungsgemäße Anordnung mit festem Schwellenwert;
- Figur 2: eine erfindungsgemäße Anordnung mit einstellbarem Schwellenwert.

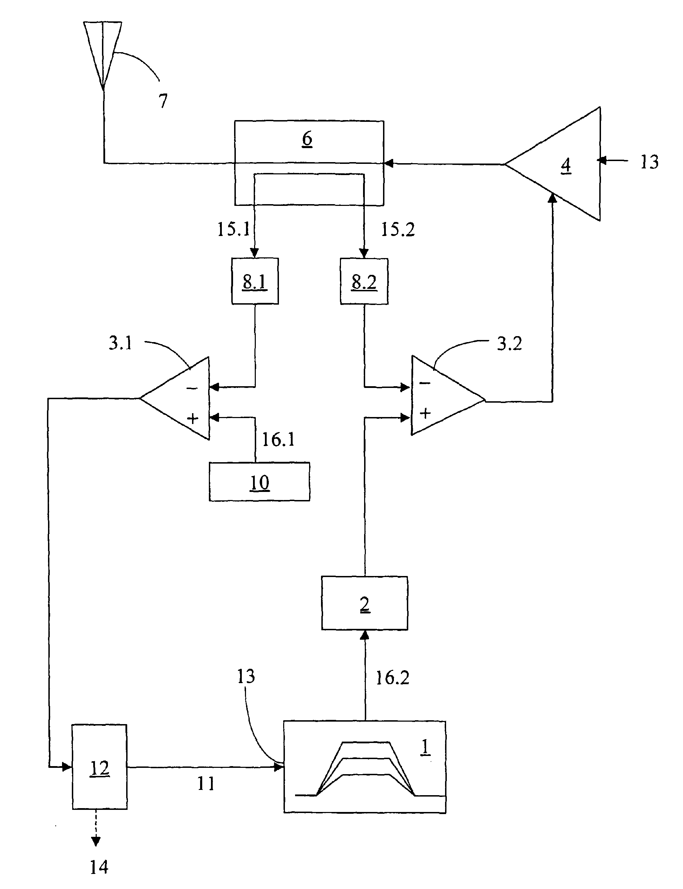

Die Figur 1 zeigt die erfindungsgemäße Anordnung in einem Mobilfunkgerät zur Ermittlung der Fehlanpassung einer Antenne 7 und Regulierung der Sendeleistung einer Endstufe 4, mit einem Koppler 6, zwei Detektoren 8.1 und 8.2, zwei Vergleichern 3.1 und 3.2, einer Wertetabelle 1, einem Digital/Analog Wandler 2, einer Auswerteeinheit 12 und einer Korrekturschaltung 10.

In diesem Ausführungsbeispiel ist der von der Korrekturschaltung 10 ausgegebene Schwellenwert, also der Rückwärts-Soll-Wert 16.1, ein festgelegter Maximalwert für die maximal tolerierbare, von der Antenne 7 reflektierte Leistung (Rückwärts-Ist-Wert 15.1).

Im Digitalteil des Mobilfunkgerätes ist die Wertetabelle 1 für die unterschiedlichen Sendeleistungen in Form einer festen Rampentabelle und einer Korrekturtabelle abgelegt, die Toleranzen des Digital/Analog Wandlers 2 und des Kopplers 6 ausgleicht. Außerdem wird eine Möglichkeit geschaffen, das Korrektursignal 11 einzurechnen. Über den Digital/Analog Wandler 2 werden von der Wertetabelle 1 ausgegebene digitale Vorwärts-Soll-Werte 16.2 in analoge Soll-Spannungen umgewandelt, die ein Maß für die Soll-Sendeleistung sind. Die Vorwärts-Soll-Werte 16.2 werden dem Vergleicher 3.2 zugeführt und dort mit dem tatsächlichen Vorwärts-Ist-Wert 15.2 verglichen. Ist der Vorwärts-Soll-Wert 16.2 größer als der Vorwärts-Ist-Wert 15.2, so steigt die Spannung am Ausgang des Vergleichers 3.2. Diese Spannung liegt am Steuereingang 9 der Endstufe 4 als Steuerspannung an. Bei steigender Steuerspannung steigt die Ausgangsleistung der Endstufe 4, bis der Vorwärts-Ist-Wert 15.2 und der Vorwärts-Soll-Wert 16.2 gleich sind.

Am Dateneingang der Endstufe 4 liegen die zu verstärkenden Sendesignale 13 an. Nach Durchlaufen der Endstufe 4 werden diese über den Koppler 6 der Antenne 7 zugeführt. Der Koppler 6 koppelt sowohl einen Teil der von der Endstufe 4 abgegebenen Leistung als auch einen Teil der von der Antenne 7 reflektierten Leistung aus. Der ausgekoppelte Teil der von der Endstufe 4 abgegebenen Leistung, der dem Vorwärts-Ist-Wert 15.2 entspricht, wird über einen Detektor 8.2, zum Beispiel einer Detektordiode oder einen logarithmischen Detektor, in eine Spannung umgewandelt. Ein logarithmischer Detektor hat den Vorteil, daß die Ausgangsspannung linear zur Eingangsleistung ist. Der Vorwärts-Ist-Wert 15.2 wird nun dem Vergleicher 3.2 zugeführt und so die Vorwärts-Regelschleife geschlossen.

Die Rückwärts-Regelschleife ist ähnlich wie die Vorwärts-Regelschleife aufgebaut. Aus der von der Antenne 7 reflektierten Leistung wird mit Hilfe des Kopplers 6 ein Teil, also der Rückwärts-Ist-Wert 15.1, ausgekoppelt und mit dem Detektor 8.1 in eine Spannung umgesetzt. Der Vergleicher 3.1 vergleicht nun diesen Rückwärts-Ist-Wert 15.1 mit dem von der Korrekturschaltung 10 gelieferten Rückwärts-Soll-Wert 15.2. Wenn nun der Rückwärts-Ist-Wert 15.1 höher ist als der von der Korrekturschaltung 10 vorgegebene Maximalwert, oder Rückwärts-Soll-Wert 16.1, so reagiert der Vergleicher 3.2, indem er seine Spannung am Ausgang verändert. Dieses Signal wird von der Auswerteeinheit 12 ausgewertet. Beispielsweise kann die Auswerteeinheit 12 ein Korrektursignal 11 an die Wertetabelle 1 ausgeben, das bewirkt, daß die Sendeleistung der Endstufe 4 verringert wird. Außerdem kann ein Warnsignal 14 an den Benutzer des Mobilfunkgerätes ausgegeben werden, wie zum Beispiel das Erscheinen eines Textes im Display "Antenne fehlangepaßt - Sendeleistung verringert" in Kombination mit einem akustischen Signal, oder einer Vibration. Da das Warnsignal optional ist, wird es in der Figur 1 gestrichelt dargestellt.

Es kann auch möglich sein, das Warnsignal auszulösen und keine Änderung in der Wertetabelle 1 vorzunehmen.

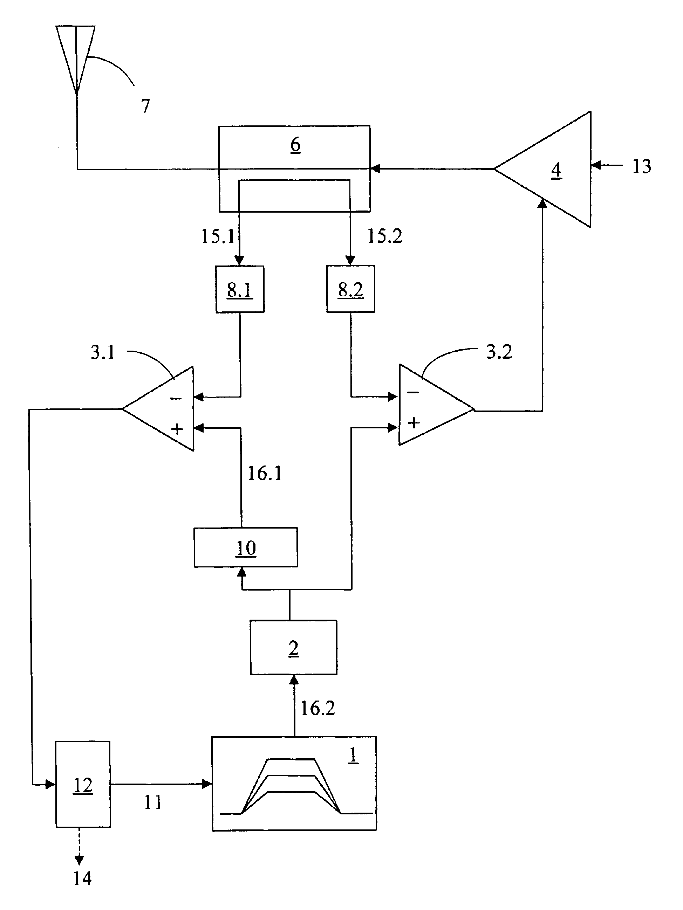

Die Figur 2 zeigt die erfindungsgemäße Anordnung in einem Mobilfunkgerät, wobei hier der von der Korrekturschaltung 10 ausgegebene Rückwärts-Soll-Wert 16.1 abhängig von der Sendeleistung der Endstufe 4 ist. Die Korrekturschaltung 10 kann hierfür von der Wertetabelle 1 Daten, beziehungsweise den Vorwärts-Soll-Wert 16.2 erhalten.

Die Korrekturschaltung 10 ist als Halteschaltung ausgebildet, die die von der Wertetabelle ausgegebenen Vorwärts-Soll-Werte 16.2 in Maximalwerte für die reflektierte Leistung, also Rückwärts-Soll-Werte 16.1, umsetzt. Da Fehlanpassungen an der Antenne 7 besonders bei hohen Leistungsstufen kritisch sind und bei niedriger Sendeleistung nicht, kann die Korrekturschaltung 10 zum Beispiel folgendes bewirken: Sie setzt den Rückwärts-Soll-Wert 16.1 der reflektierten Leistung, abhängig von der Leistungsstufe, um eine bestimmte Anzahl an Watt tiefer, als den gelieferten Vorwärts-Soll-Wert 16.2 für die Sendeleistung. Das kann zum Beispiel bedeuten, daß bei einer Soll-Sendeleistung (also einem Vorwärts-Soll-Wert 16.2) von 2 Watt der maximal tolerierbare Wert für die reflektierte Leistung (der Rückwärts-Ist-Wert 15.1) 0,7 Watt, bei einer Soll-Sendeleistung von 1 Watt die maximal tolerierbare reflektierte Leistung 0,4 Watt usw. ist. Diese Werte müssen vorher festgelegt werden.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt wird durch die Erfindung erreicht, daß ein Verfahren entwickelt wird, das es erlaubt, die Fehlanpassung sehr genau zu bestimmen und die Sendeleistung des Mobilfunkgerätes entsprechend der Fehlanpassung einzustellen. Weiterhin wird ein Mobilfunkgerät zur Durchführung des erfindungsgemäßen Verfahrens vorgestellt.

### Bezugszeichenliste

- 1: Wertetabelle
- 2: Digital/Analog-Wandler
- 3.X: Vergleicher
- 4: Endstufe
- 6: Koppler
- 7: Antenne
- 8.X: Detektor
- 9: Steuereingang
- 10: Korrekturschaltung
- 11: Korrektursignal
- 12: Auswerteeinheit
- 13: Sendesignal
- 14: Warnsignal
- 15.1: Rückwärts-Ist-Wert
- 15.2: Vorwärts-Ist-Wert
- 16.1: Rückwärts-Soll-Wert
- 16.2: Vorwärts-Soll-Wert

## Patentansprüche

1. Verfahren zum Ermitteln der Fehlanpassung einer an eine Endstufe (4) angeschlossenen Antenne (7) eines Mobilfunkgerätes und Anpassen einer Sendeleistung der Endstufe (4), wobei zwischen der Endstufe (4) und der Antenne (7) ein Anteil einer von der Endstufe (4) abgegebenen Vorwärts-Leistung (Vorwärts-Ist-Wert (15.2)) und ein weiterer Anteil einer von der Antenne (7) reflektierten Rückwärts-Leistung (Rückwärts-Ist-Wert (15.1)) ausgekoppelt wird, in einer Vorwärts-Regelschleife der Vorwärts-Ist-Wert (15.2) detektiert und mit einem von mindestens einer Wertetabelle (1) ausgegebenen Vorwärts-Soll-Wert (16.2) verglichen und je nach Vorwärts-Soll-Wert (16.2) die Sendeleistung der Endstufe (4) verändert wird, **dadurch gekennzeichnet, daß** der Rückwärts-Ist-Wert (15.1) detektiert und mit einem Rückwärts-Soll-Wert (16.1) verglichen wird und bei Überschreiten dieses Rückwärts-Soll-Wertes (16.1) der Vorwärts-Soll-Wert (16.2) verändert werden kann.

2. Verfahren gemäß dem voranstehenden Anspruch 1, **dadurch gekennzeichnet, daß** der Rückwärts-Soll-Wert (16.1) als fester Schwellenwert festgelegt wird.

3. Verfahren gemäß einem der voranstehenden Ansprüche 1 bis 2, **dadurch gekennzeichnet, daß** der Rückwärts-Soll-Wert (16.1) mit Hilfe der mindestens einen Wertetabelle (1) in Abhängigkeit von dem Vorwärts-Soll-Wert (16.2) festgelegt wird.

4. Verfahren gemäß einem der voranstehenden Ansprüche 1 bis 3, **dadurch gekennzeichnet, daß** bei Überschreiten des Rückwärts-Soll-Wertes (16.1) ein Korrektursignal (11) erzeugt wird, wodurch der Vorwärts-Soll-Wert (16.2) verändert wird.

5. Verfahren gemäß einem der voranstehenden Ansprüche 1 bis 4, **dadurch gekennzeichnet, daß** bei Überschreiten des Rückwärts-Soll-Wertes (16.1) ein Warnsignal (14) erzeugt wird.

6. Verfahren gemäß einem der voranstehenden Ansprüche 1 bis 5, **dadurch gekennzeichnet, daß** die Sendeleistung der Endstufe (4) erniedrigt wird, wenn das Überschreiten des Rückwärts-Soll-Wertes (16.1) durch eine Abschirmung der Antenne (7) von einem menschlichen Körper verursacht wird.

7. Verfahren gemäß einem der voranstehenden Ansprüche 1 bis 6, **dadurch gekennzeichnet, daß** die Sendeleistung der Endstufe (4) erhöht wird, wenn das Überschreiten des Rückwärts-Soll-Wertes (16.1) durch eine Abschirmung und/oder Rückkopplung der Antenne (7) durch einen Gegenstand verursacht wird.

8. Mobilfunkgerät mit einer Anordnung zum Ermitteln der Fehlanpassung einer an eine Endstufe (4) angeschlossenen Antenne (7) sowie zur Anpassung einer Sendeleistung der Endstufe (4), wobei ein Mittel zur Bestimmung der Sendeleistung und einer von der Antenne (7) reflektierten Leistung vorgesehen ist, wobei das Mittel, vorzugsweise einen Koppler (6), einen Detektor (8.2) und einen Vergleicher (3.2) aufweist, und der Koppler (6) einen Anteil einer von der Endstufe (4) abgegebenen Vorwärts-Leistung (Vorwärts-Ist-Wert (15.2)) und einen weiteren Anteil einer von der Antenne (7) reflektierten Rückwärts-Leistung (Rückwärts-Ist-Wert (15.1)) auskoppelt, der Detektor (8.2) den Vorwärts-Ist-Wert (15.2) detektiert und der Vergleicher (3.2) diesen Vorwärts-Ist-Wert (15.2) mit einem von mindestens einer Wertetabelle (1) festgelegten Vorwärts-Soll-Wert (16.2) vergleicht und die Sendeleistung entsprechend regelt, **dadurch gekennzeichnet, daß** ein weiterer Vergleicher (3.1), ein weiterer Detektor (8.1) und eine Korrekturschaltung (10) vorgesehen sind, wobei der Vergleicher (3.1) den von dem Detektor (8.1) detektierten Rückwärts-Ist-Wert (15.1) mit einem von der Korrekturschaltung (10) ausgegebenen Rückwärts-Soll-Wert (16.1) vergleicht und bei Überschreiten dieses Wertes (16.1) den Vorwärts-Soll-Wert (16.2) verändern kann.

9. Mobilfunkgerät gemäß dem voranstehenden Anspruch 8, **dadurch gekennzeichnet, daß** die Korrekturschaltung (10) ein Mittel zur Anpassung des Rückwärts-Soll-Wertes (16.1) in Abhängigkeit von der Signalleistung aufweist.

10. Mobilfunkgerät gemäß einem der voranstehenden Ansprüche 8 bis 9, **dadurch gekennzeichnet, daß** eine Auswerteeinheit (12) vorgesehen ist, die bei Überschreiten des Rückwärts-Soll-Wertes (16.1) ein Warnsignal (14) und/oder ein Korrektursignal (11) erzeugt.

## Claims

1. Method for determining the mismatch of an antenna (7) of a mobile radio telephone connected to a high-level stage (4) and for adapting a transmission power of the high-level stage (4), whereby, between the high-level stage (4) and the antenna (7), a portion of a forward power (actual forward value (15.2)) emitted by the high-level stage (4) and a further portion of a backward power (actual backward value (15.1)) reflected by the antenna (7) is coupled out, the actual forward value (15.2) is detected in a forward control loop and compared with a required forward value (16.2) supplied by at least one value table (1) and the transmission power of the high-level stage (4) is modified depending on the required forward value (16.2), **characterized in that** the actual backward value (15.1) is detected and compared with a required backward value (16.1) and the required forward value (16.2) can be modified if this required backward value (16.1) is exceeded.

2. Method according to the preceding Claim 1, **characterized in that** the required backward value (16.1) is defined as a fixed threshold value.

3. Method according to one of the preceding Claims 1 to 2, **characterized in that** the required backward value (16.1) is defined with the aid of the at least one value table (1) depending on the required forward value (16.2).

4. Method according to one of the preceding Claims 1 to 3, **characterized in that**, if the required backward value (16.1) is exceeded, a correction signal (11) is generated, by which the required forward value (16.2) is modified.

5. Method according to one of the preceding Claims 1 to 4, **characterized in that** a warning signal (14) is generated if the required backward value (16.1) is exceeded.

6. Method according to one of the preceding Claims 1 to 5, **characterized in that** the transmission power of the high-level stage (4) is reduced if the required backward value (16.1) is exceeded due to a shielding of the antenna (7) by a human body.

7. Method according to one of the preceding Claims 1 to 6, **characterized in that** the transmission power of the high-level stage (4) is increased if the required backward value (16.1) is exceeded due to a shielding and/or feedback of the antenna (7) by an object.

8. Mobile radio telephone with an arrangement for determining the mismatch of an antenna (7) connected to a high-level stage (4) and for adapting a transmission power of the high-level stage (4), whereby a means is provided for determining the transmission power and a power reflected by the antenna (7), whereby the means preferably has a coupler (6), a detector (8.2) and a comparator (3.2), and the coupler (6) couples out a portion of a forward power (actual forward value (15.2)) emitted by the high-level stage (4) and a further portion of a backward power (actual backward value (15.1)) reflected by the antenna (7), the detector (8.2) detects the actual forward value (15.2) and the comparator (3.2) compares this actual forward value (15.2) with a required forward value (16.2) defined by at least one value table (1) and regulates the transmission power accordingly, **characterized in that** a further comparator (3.1), a further detector (8.1) and a correction circuit (10) are provided, whereby the comparator (3.1) compares the actual backward value (15.1) detected by the detector (8.1) with a required backward value (16.1) output by the correction circuit (10) and if this value (16.1) is exceeded, can modify the required forward value (16.2).

9. Mobile radio telephone according to the preceding Claim 8, **characterized in that** the correction circuit (10) has a means for adapting the required backward value (16.1) depending on the signal power.

10. Mobile radio telephone according to one of the preceding Claims 8 or 9, **characterized in that** an evaluation unit (12) is provided, which generates a warning signal (14) and/or a correction signal (11) if the required backward value (16.1) is exceeded.

## Revendications

1. Procédé de détermination de la désadaptation d'une antenne (7), raccordée à un étage terminal (4), d'un appareil de téléphonie mobile et d'adaptation d'une puissance d'émission de l'étage final (4), procédé dans lequel une proportion d'une puissance vers l'avant délivrée par l'étage final (4) (valeur réelle vers l'avant (15.2)) et une autre proportion d'une puissance vers l'arrière réfléchie par l'antenne (16) (valeur réelle vers l'arrière (15.1)) sont découplées entre l'étage final (4) et l'antenne (16), dans lequel la valeur réelle vers l'avant (15.2) est détectée dans une boucle de régulation vers l'avant et comparée à une valeur de consigne vers l'avant (16.2) délivrée par au moins un tableau de valeurs (1) et la puissance d'émission de l'étage final (4) est modifiée en fonction de la valeur de consigne vers l'avant (16.2), **caractérisé en ce que** la valeur réelle vers l'arrière (15.1) est détectée et comparée à une valeur de consigne vers l'arrière (16.1) et la valeur de consigne vers l'avant (16.2) peut être modifiée en cas de dépassement de cette valeur de consigne vers l'arrière (16.1).

2. Procédé selon la revendication précédente 1, **caractérisé en ce que** la valeur de consigne vers l'arrière (16.1) est déterminée comme étant une valeur de seuil fixe.

3. Procédé selon l'une des revendications précédentes 1 et 2, **caractérisé en ce que** la valeur de consigne vers l'arrière (16.1) est déterminée à l'aide de l'au moins un tableau de valeurs (1) en fonction de la valeur de consigne vers l'avant (16.2).

4. Procédé selon l'une des revendications précédentes 1 à 3, **caractérisé en ce qu'**un signal de correction (11) est produit en cas de dépassement de la valeur de consigne vers l'arrière (16.1) de façon à modifier la valeur de consigne vers l'avant (16.2).

5. Procédé selon l'une des revendications précédentes 1 à 4, **caractérisé en ce qu'**un signal d'avertissement (14) est produit en cas de dépassement de la valeur de consigne vers l'arrière (16.1).

6. Procédé selon l'une des revendications précédentes 1 à 5, **caractérisé en ce que** la puissance d'émission de l'étage final (4) est abaissée lorsque le dépassement de la valeur de consigne vers l'arrière (16.1), en raison d'une protection l'antenne (7), est provoqué par un corps humain.

7. Procédé selon l'une des revendications précédentes 1 à 6, **caractérisé en ce que** la puissance d'émission de l'étage final (4) est augmentée lorsque le dépassement de la valeur de consigne vers l'arrière (16.1), en raison d'une protection et/ou une rétroaction de l'antenne (7), est provoqué par un objet.

8. Appareil de téléphonie mobile comportant un dispositif permettant de déterminer la désadaptation d'une antenne (7), raccordée à un étage final (4), et d'adapter une puissance d'émission de l'étage final (4), un moyen étant prévu pour déterminer la puissance d'émission et une puissance réfléchie par l'antenne (7), le moyen comportant avantageusement un coupleur (6), un détecteur (8.2) et un comparateur (3.2), et le coupleur (6) découplant une proportion d'une puissance vers l'avant délivrée par l'étage final (4) (valeur réelle vers l'avant (15.2)) et une autre proportion d'une puissance vers l'arrière réfléchie par l'antenne (7) (valeur réelle vers l'arrière (15.1)), le détecteur (8.2) détectant la valeur réelle vers l'avant (15.2) et le comparateur (3.2) comparant cette valeur réelle vers l'avant (15.2) à une valeur de consigne vers l'avant (16.2) déterminée depuis au moins une table de valeurs (1) et régulant de façon correspondante la puissance d'émission, **caractérisé en ce qu'**il est prévu un autre comparateur (3.1) un autre détecteur (8.1) et un circuit de correction (10), le comparateur (3.1) comparant la valeur réelle vers l'arrière (15.1) détectée par le détecteur (8.1) à une valeur de consigne vers l'arrière (16.1) délivrée par le circuit de correction (10) et pouvant modifier la valeur de consigne vers l'avant (16.2) en cas de dépassement de cette valeur (16.1).

9. Appareil de téléphonie mobile selon la revendication précédente 8, **caractérisé en ce que** le circuit de correction (10) comporte un moyen d'adaptation de la valeur de consigne vers l'arrière (16.1) en fonction de la puissance du signal.

10. Appareil de téléphonie mobile selon l'une des revendications précédentes 8 à 9, **caractérisé en ce qu'**il est prévu une unité d'exploitation (12) qui produit un signal d'alarme (14) et/ou un signal de correction (11) en cas de dépassement de la valeur de consigne vers l'arrière (16.1).
